# EUROPÄISCHE PATENTSCHRIFT

(11) **EP 3 654 002 B1**
(45) Veröffentlichungstag und Bekanntmachung des Hinweises auf die Patenterteilung: **11.01.2023**
(21) Anmeldenummer: 19176285.5
(22) Anmeldetag: 23.05.2019
(51) Int. Cl.: G01G 19/02, G01G 23/37, B66F 7/28, B66F 7/02, B66F 7/20, G01G 3/13, G01G 7/02, G01G 7/06

(54) **FAHRZEUGHEBEBÜHNE**
MOTOR VEHICLE LIFT
PONT ÉLÉVATEUR POUR VÉHICULES

(30) Priorität: 13.11.2018 DE 102018128429
(43) Veröffentlichungstag der Anmeldung: 20.05.2020
(73) Patentinhaber: Nussbaum Custom Lifts GmbH, 77694 Kehl (DE)
(72) Erfinder: Nußbaum, Steffen, 67000 Straßburg (FR); Schanz, Benjamin, 77871 Renchen (DE)
(74) Vertreter: LBP Lemcke, Brommer & Partner Patentanwälte mbB

(56) Entgegenhaltungen:
- EP-A1- 2 754 636
- WO-A1-2011/054335
- DE-U1- 9 312 286
- US-A1- 2017 113 908

## Beschreibung

Die vorliegende Erfindung betrifft eine Hebebühne für Fahrzeuge mit mittels eines Hubmechanismus höhenverstellbaren Tragarmen zum Anheben des Fahrzeugs und mit an einem freien Ende der Tragarme angeordneten Tragtellern zum Tragen des zu hebenden Fahrzeugs, wobei die Tragteller Mittel zum Erfassen einer auf den Tragteller wirkenden Gewichtskraft umfassen.

Hebebühnen mit Tragarmen sind weit verbreitet, da durch die variablen Tragarme sowohl große als auch kleine Fahrzeuge aufgenommen und angehoben werden können. Die Fahrzeuge werden hierbei auf sogenannten Tragtellern aufgenommen, die an den freien Enden der Tragarme angeordnet sind. Diese Tragteller müssen durch Einschwenken und Längenverstellung der Tragarme unter die vom Fahrzeughersteller vorgeschriebenen Aufnahmepunkte des Fahrzeugs positioniert werden, um ein sicheres Anheben zu gewährleisten. Eine häufige Ursache für Fahrzeugabstürze von Hebebühnen ist die nicht ordnungsgemäße Aufnahme bzw. nicht ordnungsgemäße Positionierung der Tragteller unter dem Fahrzeug.

Um eine nicht ordnungsgemäße Aufnahme eines Fahrzeugs frühzeitig zu erkennen, sind verschiedene Maßnahmen vorgeschlagen worden. So beschreibt die EP 2 708 489 A1, dass in den Tragarmen Dehnmessstreifen vorgesehen sein können, welche zur Bestimmung einer auf den Tragarm einwirkenden Gewichtskraft dienen. Die Sensoren sind mit einem Computer verbunden, der eine Prüfung der Gesamtlast und der Lastverteilung vornimmt. Sind die ermittelten Gewichtskräfte pro Tragarm oder insgesamt zu hoch oder liegt eine zu ungleiche Lastverteilung vor, so kann der Computer einen Hubvorgang unterbinden.

Daneben wurde auch vorgeschlagen, Sensoren statt an den Tragarmen direkt in den Tragtellern vorzusehen. So beschreibt die DE 10 2009 051 702 B3 einen Tragteller mit integrierter Gewichtsmessvorrichtung in Form eines fluidgefüllten Hohlraumes und eines an diesen angeschlossenen Druckmessgerätes. Die auf den Tragteller wirkende Gewichtskraft führt zu einer Druckerhöhung. Diese kann an einer am Umfangrand des Tragtellers befindlichen Anzeige angezeigt werden.

Die DE 10 2007 053 757 B3 zeigt einen Tragteller, der auf einer Flüssigkeitsgefüllten Kammer ruht, deren Fluiddruck zur Ermittlung einer auflastenden Gewichtskraft gemessen wird.

In ähnlicher Weise beschreibt die Schrift EP 1876136 B1 einen Tragteller mit in deren Halterung integriertem Sensor zur Gewichtskraftmessung. Mit diesen Vorrichtungen kann jedoch nicht festgestellt werden, ob eine Gewichtskraft außermittig auf dem Tragteller lastet und daher gegebenenfalls ein Abrutschen des Fahrzeugs von einem Tragteller auftreten könnte.

Die Schrift EP 631976 A1 beschreibt eine Hebebühne mit Tragarmen, bei denen in den Tragtellern Schalter angeordnet sind, mit denen ein Verkippen eines Tragtellers aufgrund ungleichmäßiger Gewichtsbelastung erkannt werden soll. Schließlich beschreibt die EP 2754636 B1 eine Hebebühne mit Tragarmen, deren Tragteller im Inneren eine sternförmige Tragstruktur aufweisen, an der mittels vier Dehnmessstreifen eine Verformung der Tragstruktur durch darauf auflastende Gewichtskräfte gemessen werden kann. In gewissem Umfang kann hierdurch auch eine ungleichmäßige Belastung der Tragteller erkannt werden.

Ein weiterer Stand der Technik ist die US 2017/113908 A1, in welcher eine Einrichtung zum Anheben eines Fahrzeuges offenbart wird, mit welcher Gleichgewichtsinformation über ein externes Gerät, wie beispielsweise ein Smartphone, ausgegeben wird.

Eine Aufgabe der vorliegenden Erfindung besteht darin, die Sicherheit einer Hebebühne in Hinblick auf das Risiko von Fahrzeugabstürzen weiter zu verbessern und insbesondere dem Bedienpersonal eine einfache und intuitive Erkennung einer unsachgemäßen bzw. riskanten Aufnahme eines Fahrzeuges zu ermöglichen.

Die Aufgabe wird gelöst durch die Merkmale des Anspruchs 1. Vorteilhafte Ausgestaltungen sind den abhängigen Ansprüchen zu entnehmen.

Bei einer Hebebühne der eingangs genannten Art ist erfindungsgemäß vorgesehen, dass an den Tragtellern jeweils eine Sensoranordnung aus einer Mehrzahl über einer Anlagefläche der Tragteller verteilt angeordneter Drucksensoren verbaut ist und jedem Tragteller eine Anzeige zugeordnet ist, welche eine Druckverteilung über die Anlagefläche des jeweiligen Tragtellers anzeigt. Indem die Belastung jedes einzelnen Tragtellers und vor allem die Verteilung der Last über jeden einzelnen Tragteller dem Bediener optisch visualisiert wird, kann dieser auf einen Blick erkennen, ob das Fahrzeug richtig aufgenommen wurde oder ob eventuell ein Risiko besteht, dass das Fahrzeug von einem der Tragteller abrutschen könnte.

Bei einer bevorzugten Ausführung ist die einem Tragteller zugeordnete Anzeige an der Unterseite des zugehörigen Tragtellers angeordnet, d.h. die Anzeige weist nach unten. Somit kann einem Bediener an der Unterseite des Tragtellers direkt ein Spiegelbild der Kraftverteilung über die Anlagefläche des Tragtellers visualisiert und angezeigt werden. Ein Bediener erkennt, wenn er unter ein angehobenes Fahrzeug tritt, sofort, ob die Last gleichmäßig über die Tragteller verteilt ist oder ob einer der Tragteller so einseitig belastet ist, dass gegebenenfalls ein Abrutschen des Fahrzeuges drohen könnte.

In ähnlicher Weise kann die Anzeige statt an der Unterseite des zugehörigen Tragtellers auch an der Unterseite des dem Tragteller zugeordneten Tragarmes angeordnet sein. In diesem Fall wird jedoch eine Signalverbindung vom Tragteller zu dem jeweiligen Tragarm benötigt.

Insbesondere kann im Rahmen der vorliegenden Erfindung vorgesehen sein, dass die Anzeigen von Form und Flächengröße im Wesentlichen der Anlagefläche der zugehörigen Tragteller entsprechen. Mit anderen Worten zeigen die einzelnen Anzeigen jeweils ein visualisiertes vorzugsweise spiegelbildliches Abbild der Anlagefläche des zugehörigen Tragtellers und der über diesen verteilten Auflast. Dies ermöglicht eine besonders intuitive und einfache Darstellung der Lastverteilung.

Die Anzeigen können vorzugsweise als Leuchtanzeigen, insbesondere als mehrfarbige Leuchtanzeigen ausgebildet sein. Somit kann der Bediener unabhängig von den Beleuchtungsverhältnissen unter der Hebebühne die Lastverteilung an den Tragtellern feststellen, wenn er unter die Hebebühne tritt. Eine mehrfarbige Leuchtanzeige ermöglicht eine besonders intuitive Visualisierung der Lastverteilung durch Verwendung unterschiedlicher Farben für unterschiedlich hohe Flächendruckkräfte.

Bei einer bevorzugten Ausführungsform bestehen die Anzeigen aus einer Vielzahl zu einer flächigen Leuchtanzeige zusammengesetzter Leuchtmittel, insbesondere Leuchtdioden. Statt einzelner Leuchtdioden kann die Anzeige auch durch eine beliebige andere, flächige Leuchtanzeige, beispielsweise eine hinterleuchtete LCD-Anzeige ausgebildet sein.

Ebenso ist es möglich, dass die Sensoranordnung als Matrixsensor mit einer Vielzahl matrixförmig angeordneter Sensorzellen ausgebildet ist. Hierbei ist besonders vorteilhaft, wenn die Anzeige pro Sensorzelle ein vorzugsweise mehrfarbiges Leuchtmittel, insbesondere eine mehrfarbige Leuchtdiode, aufweist und die Leuchtmittel in dem Matrixsensor entsprechender Matrixform angeordnet sind. Somit entspricht jedes einzelne Leuchtmittel und somit jeder einzelne Leuchtpunkt in der Matrixanordnung einer zugehörigen Sensorzelle und visualisiert die von dieser Sensorzelle gemessene Druckkraft, beispielsweise durch unterschiedliche Farben oder unterschiedliche Leuchtstärke. Ein Benutzer erkennt somit intuitiv die Lastverteilung über die Anlagefläche des Tragtellers.

Bei einer Ausführung der Erfindung können die Sensorzellen als piezoresistive Sensoren ausgebildet sein. Durch einfache Widerstandsmessung kann somit der druckabhängige Widerstand der einzelnen Sensorzellen bestimmt werden. Zudem sind derartige Sensorzellen einfach und kompakt im Aufbau.

Nach einer besonders bevorzugten Ausführungsform ist die Sensoranordnung als Foliensensor ausgebildet. Dieser umfasst zumindest zwei Folien, auf denen Leiterbahnen aufgebracht sind, wobei die Leiterbahnen der beiden Folien sich wechselseitig kreuzen. Die Kreuzungspunkte bilden hierbei die Sensorzellen der Sensoranordnung. Ein solcher Foliensensor ist einfach in der Herstellung und robust in der Handhabung.

Die Tragteller sind vorzugsweise mit einer tellerförmigen Tragstruktur ausgebildet, deren Oberseite von einer insbesondere gummielastischen bzw. rutschhemmenden Abdeckung, insbesondere einer Elastomerauflage, überdeckt ist. Die Sensoranordnung ist hierbei zwischen Tragstruktur und Abdeckung angeordnet.

Die Abdeckung sorgt für eine sichere Anlage am Fahrzeug und schützt die darunterliegende Sensoranordnung. Aufgrund der elastischen Eigenschaften der Abdeckung kann dennoch eine genaue Druckverteilung über die Anlagefläche des Tragtellers gemessen werden.

Im Rahmen der vorliegenden Erfindung können verschiedene Messverfahren zur Messung der auf dem Tragteller auflastenden Gewichtskraft und Gewichtsverteilung eingesetzt werden, u.a. piezoelektrische, magnetoelastische, kapazitive oder magnetinduktive Kraftmessung. Die genannten Messverfahren basieren im Wesentlichen auf einer Verformung eines Werkstoffs, die messtechnisch erfasst wird.

Bei der piezoelektrischen Kraftmessung entsteht in einem piezokeramischen Element durch Krafteinwirkung eine Ladungsverteilung Q, die proportional zur Kraft ist und gemessen werden kann. Diese Messmethode ermöglicht insbesondere dynamische Messungen.

Bei der magnetoelastischen Kraftmessung wird eine Veränderung der magnetische Permeabilität µ eines Werkstoffes unter Krafteinwirkung erfasst. Dies kann mittels zweier Spulen erfolgen, indem eine Änderung des von einer primären auf eine sekundäre Spule übertragene magnetische Fluss gemessen wird. Dieses Messverfahren eignet sich besonders für statische Messungen.

Bei der kapazitiven Kraftmessung wird ein Sensor eingesetzt, welcher auf Basis der Veränderung der elektrischen Kapazität eines einzelnen Kondensators oder eines Kondensatorsystems arbeitet. Die Kapazität ist proportional zum Abstand der Kondensatorplatten.

Ein weiteres Messprinzip, welches im Rahmen der vorliegenden Erfindung besonders bevorzugt eingesetzt werden kann, ist die induktive Abstandsmessung zwischen einer Spule und einer metallischen Platte (magnetinduktive Kraftmessung). Die Änderung des Abstands wirkt sich auf die Induktivität aus, die wiederum elektrisch ausgewertet werden kann.

Bei einer bevorzugten Ausführungsform der Erfindung wird eine Verformung einer Elastomerauflage des Tragtellers erfasst. Die Tragteller weisen hierzu eine tellerförmige Tragstruktur und eine darüber angeordnete, insbesondere gummielastische Auflage auf und die Sensoranordnung ist ausgebildet, eine Verformung der elastischen Auflage unter Krafteinwirkung zu detektieren.

Hierzu kann vorzugsweise in die elastische Auflage der Tragteller ein metallisches Element, insbesondere ein scheibenförmiges Element, etwa ein Zwischenblech, eingebettet werden und die Sensoranordnung ausgebildet sein, eine Abstandsänderung zwischen dem Element und der Tragstruktur unter Krafteinwirkung zu detektieren. Ein solches metallisches Element sorgt einerseits für eine flächige Druckverteilung auf den Tragteller. Anderseits kann das metallische Element im Rahmen der vorliegenden Erfindung außerdem als Bezugspunkt für eine induktive Abstandsmessung verwendet werden. Das zwischen der Tragstruktur des Tragtellers und dem Zwischenblech befindliche Material der Elastomerauflage wird abhängig von einer auflastenden Kraft verformt. Zur Messung wird somit die Abstandsänderung zwischen Tragstruktur des Tragtellers und dem Zwischenblech unter Krafteinwirkung, d.h. die Dickenänderung der dazwischen befindlichen Elastomerschicht, gemessen.

Um die Kraft auf den Sensor zu leiten könnten alternativ oder kumulativ zu der genannten Elastomerauflage auch Federelemente wie etwa Tellerfedern oder Schraubentellerfedern eingesetzt werden.

Zur Messung der Abstandsänderung kann vorgesehen sein, dass die Sensoranordnung mindestens eine Spule aufweist und dass eine Messanordnung vorgesehen ist zur Messung einer Änderung der Induktivität der Spule aufgrund einer Abstandsänderung zwischen Spule und metallischem Element.

Bevorzugt kann die Sensoranordnung zur Messung einer Druckkraftverteilung mehrere in Umfangsrichtung versetzt angeordnete Spulen, insbesondere auf eine zwischen elastischer Auflage und Tragstruktur angeordnete Leiterplatte aufgedruckte Spulen umfassen.

Bei einer weiteren Ausführungsform basierend auf einer kapazitiven Kraftmessung, können zwei leitende Platten, die mit einem isolierenden Material beabstandet sind, verwendet werden, wobei das isolierende Material als Feder dient. Eine einfache Variante wäre die Verwendung einer Leiterplatte mit Kupferflächen, wobei das Platinenmaterial als Feder dient. Der Vorteil dieses Konzepts ist es, dass keine Elemente des Tragtellers direkt zur Kraftmessung verwendet werden.

Ein typisches Platinenmaterial ist FR4, ein Verbundwerkstoff aus Epoxidharz und Glasfasergewebe. Dessen Elastizität und somit die lastabhängige Dickenänderung sind hierbei jedoch verhältnismäßig gering, so dass die elektrische Kapazitätsmessung entsprechend empfindlich sein muss. Um eine möglichst große Änderung zu erreichen, wäre eine möglichst kleine Auflagefläche vorteilhaft. Alternativ können andere Platinenwerkstoffe mit höherer Elastizität wie etwa Polyamid verwendet werden.

Zur Bestimmung der Kapazität des Plattenkondensators können unterschiedliche Messverfahren zum Einsatz kommen, u,a.
- Capacitive Sensing (CPS): Kapazität mit Konstantstrom laden und über Komparator die Lade- bzw. Entladezeit als Frequenzsignal herausgeben. Die resultierende Frequenz kann dann gemessen werden und die Frequenzänderung ist proportional zur Kapazitätsänderung. Durch Erhöhung der Messzeit kann die Auflösung verbessert und der Einfluss von Störfaktoren durch Mittelwertbildung reduziert werden.
- Capacitive Voltage Divider (CVD): Relative Kapazitätsmessung über einen kapazitiven Spannungsteiler und Messung der resultierenden Spannung mit einem ADC. Dieses Messprinzip ist für eine schnelle und relative Kapazitätsmessung gut geeignet. Die Auflösung hängt direkt mit der Genauigkeit des eingesetzten ADC ab.

Im Rahmen der vorliegenden Erfindung kann außerdem vorgesehen sein, dass die Sensoranordnungen und zugehörigen Anzeigen der Tragteller batteriebetrieben sind. Die Batterien können insbesondere ebenfalls innerhalb der Tragteller bzw. deren Tragstruktur untergebracht sein, sodass die Tragteller als autarke Einheiten arbeiten und keinerlei Kabelverbindung zu den Tragarmen benötigt wird. Dies ermöglicht einerseits eine Nachrüstung der Tragteller an vorhandene Hebebühnen, andererseits werden keine empfindlichen elektrischen Leitungen benötigt, die eine Fehlerquelle darstellen könnten, was einen störunanfälligen Betrieb der Hebebühne ermöglicht.

Im Rahmen der vorliegenden Erfindung kann in einer bevorzugten Weiterbildung aus den von den Sensoranordnungen erzeugten Signalen jeweils eine auf dem zugehörigen Tragteller lastende Gesamtgewichtskraft ermittelt und vorzugsweise drahtlos an eine zentrale Steuerung übertragen werden. Dies ermöglicht einen Vergleich der von den einzelnen Tragarmen aufgenommenen Last, sodass bestimmt werden kann, ob das Fahrzeug an allen Auflagerpunkten richtig aufgenommen wurde. Werden unzulässig hohe Abweichungen zwischen den einzelnen Tragarmen festgestellt, kann ein Fehlersignal ausgegeben und/oder ein Anheben des Fahrzeugs unterbunden werden.

Im Rahmen der Erfindung kann auch vorgesehen sein, dass die auf der Anzeige dargestellte Druckverteilung bzw. die von der Sensoranordnung ermittelten Werte für die Flächenbelastung in Form eines Protokolls für eine gewisse Zeitdauer gespeichert und aufbewahrt werden. Hierdurch ist es möglich, im Falle eines Fehlers oder Unfalls im Nachhinein die Aufnahmesituation eines Fahrzeugs nachzuvollziehen. Ebenso kann vorgesehen sein, dass die von der Sensoranordnung gemessenen oder hieraus abgeleitete Signale an eine Zentralstelle übertragen und dort weiterverarbeitet oder zwischengespeichert werden. Die Übertragung kann insbesondere über eine Drahtlosschnittstelle erfolgen. In der Zentralstelle kann der Betriebszustand der Hebebühne überwacht sowie Betriebs- und Bedienungsparameter erfasst und protokolliert werden.

Die Erfindung betrifft außerdem einen Tragteller für eine Fahrzeughebebühne mit einer Sensoranordnung aus einer Mehrzahl über eine Anlagefläche des Tragtellers verteilt angeordneten Drucksensoren zum Erfassen einer auf den Tragteller wirkenden Gewichtskraft sowie deren Verteilung über die Anlagefläche des Tragtellers. Außerdem weist der Tragteller eine vorzugsweise an der Unterseite angeordnete Anzeige auf, welche eine Druckverteilung über die Anlagefläche anzeigt.

Weitere Eigenschaften und Vorteile der Erfindung werden anhand der Ausführungsbeispiele und der beigefügten Zeichnungen beschrieben. Hierbei zeigt:
- Figur 1: eine 2-Säulen-Hebebühne mit vier Tragarmen, an deren freien Enden jeweils ein Tragteller angeordnet ist,
- Figur 2: einen Schnitt durch einen Tragteller in einem ersten Ausführungsbeispiel, der bei der Hebebühne in Figur 1 zum Einsatz kommen kann,
- Figur 3: eine Prinzipzeichnung eines drucksensitiven Foliensensors, wie er bei einem Tragteller verwendet werden kann,
- Figur 4: einen Schnitt durch einen Tragteller in einem zweiten Ausführungsbeispiel,
- Figur 5: einen Schnitt durch eine Elastomerauflage für den Tragteller aus Figur 4,
- Figur 6: eine isometrische Ansicht der Elastomerauflage aus Figur 5 und
- Figur 7: ein Blockschaltbild einer Sensoranordnung, Anzeigeeinrichtung und zugehöriger Steuerschaltung.

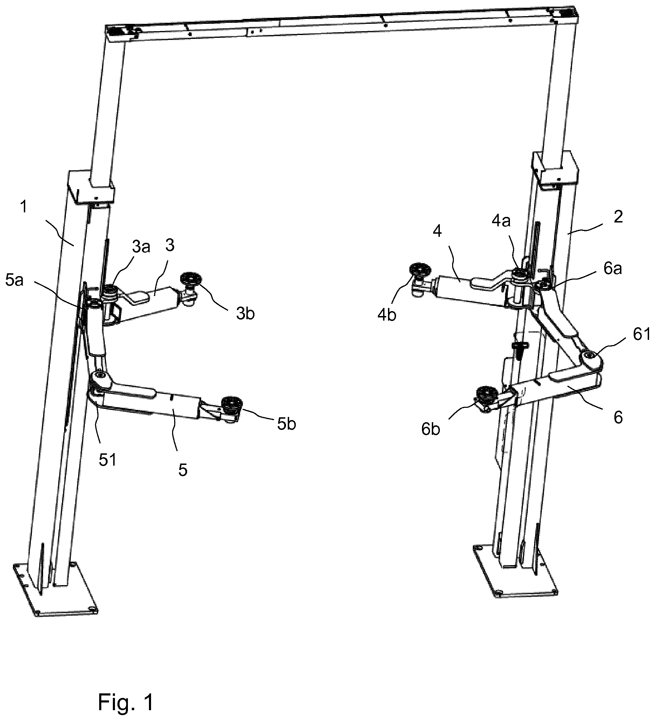

In Figur 1 ist eine Hebebühne mit zwei Hubsäulen 1, 2 dargestellt, an denen jeweils zwei Tragarme 3, 5 bzw. 4, 6 schwenkbar angelenkt sind. Die Tragarme 3, 4, 5, 6 sind höhenverstellbar, das heißt sie können angehoben und abgesenkt werden. Der Hubantrieb innerhalb der Hubsäule 1, 2 erfolgt in an sich bekannter Weise, beispielsweise mittels Zylinderkolbenaggregaten, mittels einer Gewindespindel oder mittels eines Kettenantriebs. Die vorliegende Erfindung ist nicht auf zwei Säulenhebebühnen beschränkt, sondern kann bei allen Arten von Hebebühnen mit Tragarmen zum Einsatz kommen, wie etwa 4-Säulen-Hebebühnen oder Stempelhebebühnen.

Die Tragarme 3, 4 bilden ein vorderes Tragarmpaar, das heißt dienen zum Anheben der vorderen Fahrzeughälfte, und die Tragarme 5, 6 bilden ein Tragarmpaar für die hintere Fahrzeughälfte. Die Tragarme 3 und 5 der linken Fahrzeugseite sind spiegelbildlich zu den Tragarmen 4, 6 der rechten Fahrzeugseite angeordnet. Die Tragarme sind jeweils über ein Schwenklager 3a, 4a, 5a, 6a schwenkbar an ihrer zugehörigen Hubsäule 1, 2 gelagert, sodass sie unter ein zwischen den Hubsäulen 1, 2 abgestelltes Fahrzeug untergeschwenkt und zu den Aufnahmepunkten am Fahrzeugboden bewegt werden können.

An den freien Enden der Tragarme 3, 4, 5, 6 sind Tragteller 3b, 4b, 5b, 6b angeordnet, die beim Anheben der Tragarme in Anlage mit dem Fahrzeug kommen. Über ein Gewinde können die Tragteller 3b, 4b, 5b, 6b gegenüber den zugehörigen Tragarmen 3, 4, 5, 6 auch im gewissen Umfang in der Höhe verstellbar sein.

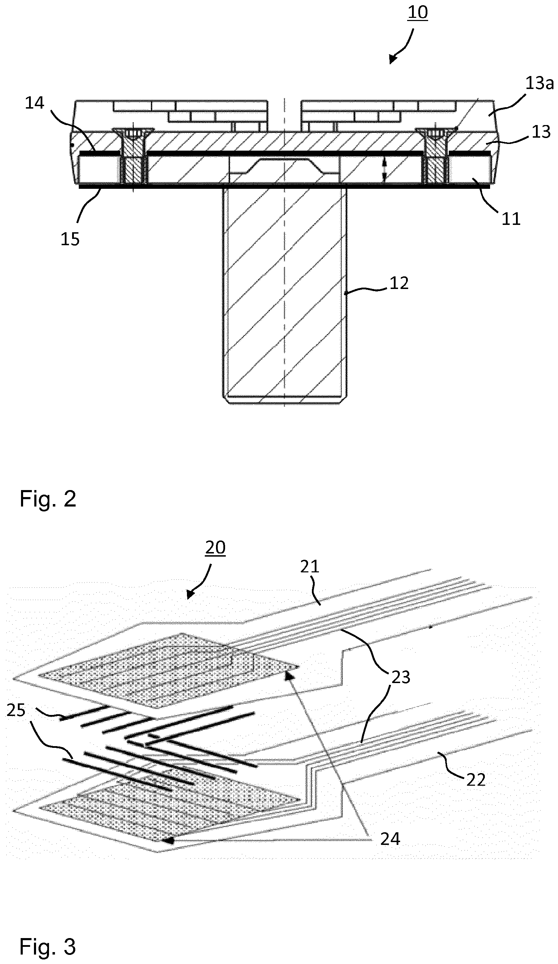

In Figur 2 ist beispielhaft ein Tragteller 10 dargestellt. Er umfasst eine tellerförmige Tragstruktur 11, die über einen an ihrer Unterseite angeordneten Zapfen oder Gewindebolzen 12 in einer entsprechenden Aufnahme an einem Tragarm befestigt wird. Auf der Oberseite der Tragstruktur 11 befindet sich eine Abdeckung 13 mit einer rutschhemmend strukturierten Oberseite 13a. Die Abdeckung 13 ist mit der Tragstruktur 11 verschraubt. Sie besteht aus einem gummielastischen Material, welches eine sichere Anlage an einem Fahrzeug gewährleistet. Zwischen der Auflage 13 und der Tragstruktur 11 befindet sich eine Sensoranordnung 14 in Form eines Foliensensors mit einer Vielzahl über die Sensorfläche verteilter drucksensitiver Sensorzellen. Der Foliensensor 14 ermöglicht die Messung einer Druckkraftverteilung über die Anlagefläche des Tragtellers 10. An der Unterseite der Tragstruktur 11 befindet sich eine Leuchtanzeige 15, welche dazu dient, ein spiegelverkehrtes Abbild der von dem Foliensensor 14 gemessenen Druckverteilung darzustellen und anzuzeigen.

Die Leuchtanzeige 15 besteht im Ausführungsbeispiel aus einer Vielzahl einzelnen Leuchtpunkte in Form mehrfarbiger Leuchtdioden und erstreckt sich über die gesamte zur Verfügung stehende Unterseite des Tragtellers (also ausgenommen der von dem Zapfen beanspruchten Fläche). Die Leuchtpunkte sind einzeln in Abhängigkeit der direkt über ihnen gemessenen Druckkraft ansteuerbar. Die Ansteuerung erfolgt über eine hier nicht näher gezeigte Auswerteelektronik, welche beispielsweise innerhalb eines Hohlraumes in dem Zapfen bzw. Bolzen 12 untergebracht sein kann.

Die Visualisierung der über die Auflagefläche des Tragtellers 10 gemessenen Druckkraftverteilung über eine Leuchtanzeige 15 ermöglicht es einem Bediener, bevor er unter ein angehobenes Fahrzeug tritt, zu prüfen, ob das Fahrzeug an den Stützpunkten korrekt aufgenommen wurde. Konzentriert sich die Auflagekraft beispielsweise in einem Bereich am Rand des Tragtellers 10, so könnte das Fahrzeug bei Arbeiten verrutschen und abstürzen. Eine solche Situation kann einfach erkannt und zur Unfallvermeidung korrigiert werden. Auf diese Weise trägt die Messung und Visualisierung der Druckkraftverteilung an den einzelnen Tragtellern 10 zur Erhöhung der Arbeitssicherheit bei.

In dem Bolzen bzw. Zapfen 12 kann außerdem eine batteriegestützte Stromversorgung zum autarken Betrieb der Leuchtanzeige untergebracht sein sowie ein kompakter Sender, mit dem gemessene Druckkraftsignale an eine zentrale Steuerung übertragen werden können, um so einen Vergleich der Auflast an den einzelnen Tragarmen zu ermöglichen.

Im Ausführungsbeispiel sind die Tragarme des hinteren Tragarmpaars, ohne dass die Erfindung hierauf beschränkt wäre, als Doppelgelenkarme ausgebildet, während die Tragarme 3, 4 des vorderen Tragarmpaars als herkömmliche, starre Tragarme ausgeführt sind. Die Tragarme 3, 4 sind somit lediglich um ihren jeweiligen Anlenkpunkt 3a, 4a an den Säulen 1, 2 verschwenkbar und können außerdem teleskopisch in der Länge verstellt werden (2-fach teleskopisch längenverstellbar). Die hinteren beiden Tragarme 5, 6 sind mit einem zusätzlichen Knickgelenk 51, 61 versehen, sodass der jeweilige Tragarm 5, 6 in seiner durch das Schwenkgelenk 5a, 6a definierten Schwenkebene abgewinkelt werden kann. Außerdem sind die hinteren Tragarme 5, 6 ebenfalls teleskopisch längenverstellbar. Diese Anordnung ermöglicht eine sehr variable Aufnahme von Fahrzeugen und insbesondere die Aufnahme von Fahrzeugen unterschiedlicher Fahrzeuglänge.

Der unter dem die Abdeckung 13 des Tragtellers 10 bildenden Kunststoffteil angeordnete Foliensensor 14 dient dazu, die Punktbelastung über die Auflagefläche des Tragtellers zu erkennen bzw. zu messen. Ein Beispiel für einen solchen Foliensensor ist schematisch in Figur 3 dargestellt. Der dort gezeigte Foliensensor 20 besteht aus zwei dünnen Polyesterfolien 21, 22, auf denen Leiterbahnen 23 aufgedruckt sind. Im jeweiligen Messbereich 24 der Folien 21, 22 sind die Leiterbahnen 23 aufgefächert und verlaufen senkrecht zueinander, das heißt auf der Folie 21 in Längsrichtung und auf der Folie 22 in Querrichtung, sodass zwischen den aufeinandergelegten Folien 21, 22 eine Matrixanordnung entsteht.

Auf der Innenseite der beiden Folien 21, 22 ist entlang der Leiterbahnen 23 eine drucksensitive, insbesondere piezoresistive Beschichtung 25 aufgebracht. Aufgrund dieser Beschichtung besteht an den Kreuzungspunkten der Matrix zwischen den sich kreuzenden Leiterbahnen 23 ein druckkraftabhängiger, variabler Widerstand. Jeder Kreuzungspunkt der Matrix bildet somit eine Sensorzelle bzw. ein Sensorelement (Druckkraftsensor). Über einen prozessorgesteuerten Multiplexer kann jeder Kreuzungspunkt der Matrix beschaltet und dessen Zellenwiderstand gemessen werden. Die Beschaltung über die Auswerteelektronik verhindert eine gegenseitige Beeinflussung der Zellen. Form und Matrixgeometrie des Foliensensors 20 kann an die jeweilige Anwendung angepasst werden. Für die Anwendung bei dem Tragteller 10 können auch beispielsweise die Leiterbahnen auf der einen Folie in Form konzentrischer Ringe, auf der anderen Folie strahlenförmig in radialer Richtung verlaufen. Über den Abstand der bedruckten Leiterbahnen 23 kann die Sensordichte vorgegeben werden. Die Anzahl der über die Sensormatrix verteilten Sensorzellen kann mehrere hundert bis hin zu mehreren (zehn-)tausend Sensoren betragen.

Entsprechend der Verteilung der Sensorzellen über den Foliensensor 14 werden die Leuchtpunkte der Leuchtanzeige 15 an der Unterseite des Tragtellers angeordnet, sodass jeder Sensorzelle einem Leuchtpunkt entspricht. Ebenso ist es jedoch auch möglich, mehrere Sensorzellen bei entsprechender hoher Zelldichte zusammenzufassen und einem Leuchtpunkt zuzuordnen. Zur Vereinfachung kann die Leuchtanzeige 15 auch in Segmente unterteilt und segmentweise angesteuert werden. Durch die optische Signalisierung der Druckkraftverteilung über die Aufnahmefläche des Tragtellers ist der Bediener zu jeder Zeit in der Lage, die ordnungsgemäße Aufnahme des angehobenen Fahrzeugs zu überprüfen. Eine Summierung über die von den einzelnen Sensorzellen gemessenen Druckkraft ermöglicht eine Wiegefunktion der von dem Tragteller insgesamt aufgenommenen Auflast. Für einen Vergleich der auf den verschiedenen Tragarmen ruhenden Lasten kann dieser Wert drahtlos an eine Basisstation übertragen werden.

Bei einer Weiterbildung der Erfindung kann die auf der Anzeige dargestellte Druckverteilung bzw. können die von der Sensoranordnung 15 ermittelten Werte für die Flächenbelastung in Form eines Protokolls für eine gewisse Zeitdauer gespeichert und aufbewahrt werden. Hierdurch ist es möglich, im Falle eines Fehlers oder Unfalls im Nachhinein die Aufnahmesituation eines Fahrzeugs nachzuvollziehen. Ebenso ist es möglich, dass die von der Sensoranordnung 15 gemessenen oder hieraus abgeleitete Signale an eine Zentralstelle übertragen und dort weiterverarbeitet oder zwischengespeichert werden. Die Übertragung kann insbesondere über eine Drahtlosschnittstelle erfolgen. In der Zentralstelle kann der Betriebszustand der Hebebühne überwacht sowie Betriebs- und Bedienungsparameter erfasst und protokolliert werden.

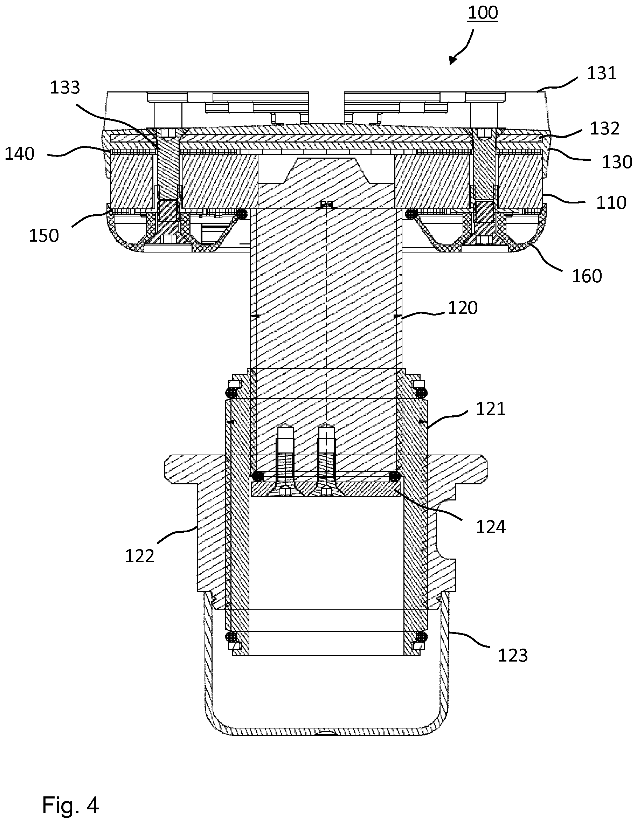

Ein weiteres Ausführungsbeispiel der Erfindung ist in den Figuren 4 bis 7 gezeigt. Der in Figur 4 in einem Schnitt gezeigte Tragteller 100 besitzt eine tellerförmige Tragstruktur 110, die als Aufnahmeteller bezeichnet wird. An dessen Unterseite ist mittig ein Gewindebolzen 120 (z.B. M42x3) befestigt. Zur teleskopischen Höhenverstellung steckt dieser in einer Gewindebuchse 121, die wiederum ein Außengewinde (z.B. M56x3) aufweist, mit dem sie in einer Teleskopbuche 122 mit entsprechendem Innengewinde eingeschraubt ist. An der Unterseite ist die Teleskopbuche 122 mit einer Schutzkappe 123 versehen. Eine gegen die Unterseite des Gewindebolzens 120 geschraubte Scheibe 124 sichert den Gewindebolzen im unteren, radial erweiterten Bereich der Gewindebuchse 121, so dass der Gewindebolzen 120 nur innerhalb des zulässigen Verstellbereichs gegenüber der Gewindebuchse 121 in der Höhe heraus- oder hereingeschraubt, aber nicht entnommen werden kann. In Figur 4 ist die maximal nach ober herausgeschraubte Stellung des Gewindebolzens 120 in der Gewindebuchse 121 dargestellt.

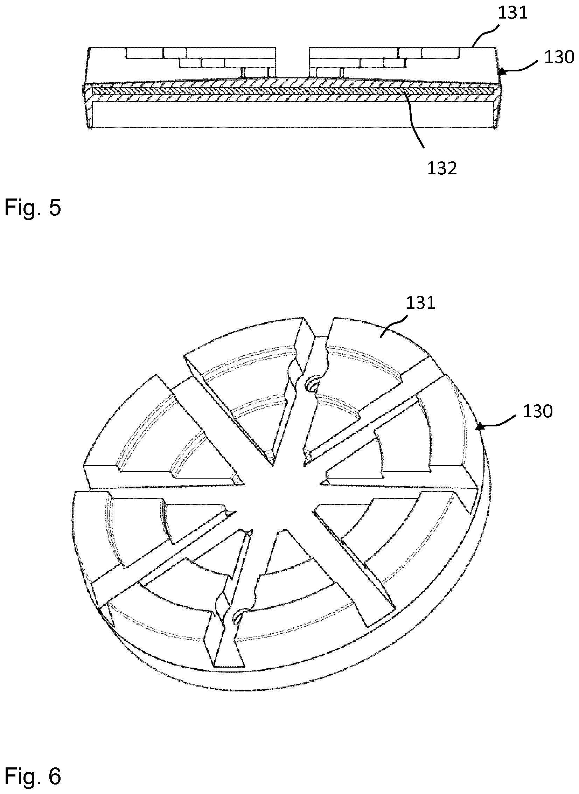

Auf der Oberseite des Aufnahmetellers 110 ist eine Elastomerauflage 130 angeordnet, die den Aufnahmetellers 110 randseitig umgreift und von der Oberseite her mittels zweier Senkkopfschrauben 133 mit dem Aufnahmeteller 110 verschraubt ist. An der Oberseite besitzt die Elastomerauflage 130 eine rutschhemmende Profilierung in Form segmentierter, nach außen hin höher werdender Stufenringe 131, deren Anordnung in Figur 6 deutlicher zu erkennen sind.

Die Elastomerauflage besteht im Ausführungsbeispiel, ohne dass die Erfindung hierauf beschränkt wäre, aus Acryl-Nitril-Butadien-Kautschuk (NBR), welcher auch unter dem Handelsnamen Perbunan bekannt ist. Dieser Synthesekautschuk ist hervorragend beständig gegen Einwirkung von Kraftstoffen und Ölen, insbesondere Hydraulikölen, Schmierfetten, sowie sonstigen aliphatischen Kohlenwasserstoffen, Säuren und Laugen. Gute physikalische Werte wie z.B. hohe Abrieb- und Standfestigkeit und eine günstige Temperaturbeständigkeit von - 25°C bis +100°C machen den Werkstoff ideal geeignet für die Anwendung in Automobilwerkstätten, und hier insbesondere für ein Auflagerelement zur Aufnahme schwerer Kraftfahrzeuge. Weitere Materialien, die für den genannten Einsatz in Betracht kommen sind z.B. HNBR (hydrierter NBR) oder Viton (Fluorkautschuk).

Die gezeigte Elastomerauflage hat eine Shore-Härte (Shore A) von 70 ± 5 Shore. Bei einer Auflast von 1250 kg und einem Durchmesser des Tragtellers von 120 mm ergibt sich dabei eine Abstandsänderung im Bereich von 5%. Diese bietet eine gute Basis für eine induktive Abstandsmessung mit einer ausreichenden Messwertänderung auch bei kleineren Lasten.

Der Tragteller 100 umfasst eine erste Leiterplatte 140, welche zwischen Elastomerauflage 130 und Aufnahmeteller 110 angeordnet ist, und eine zweite, an der Unterseite des Aufnahmetellers 110 angebrachte Leiterplatte 150. Eine transparente Abdeckung 160 schützt die untere Leiterplatte 150 und deren Bauteile gegen mechanische Einflüsse und Schmutz. Die Leiterplatten 140 und 150 sind über einen durch ein Langloch in der Tragstruktur 110 geführten Leiterplattenverbinder bzw. Steckverbinder miteinander signaltechnisch verbunden. Die Leiterplatte 140 besteht aus einem üblichen Leiterplattenmaterial FR4, einem Verbundwerkstoff aus Epoxidharz und Glasfasergewebe. Durch die große Auflagefläche und das verwendete Leiterplattenmaterial kann die Auflagekraft problemlos über die Leiterplatte 140 übertragen werden. Die Leiterplatte 140 umfasst eine Sensoranordnung zur Messung einer Druckkraftverteilung. Die zweite Leiterplatte 150 enthält einerseits eine Auswerteelektronik und Stromversorgung für die auf der oberen Leiterplatte 140 befindliche Sensoranordnung, anderseits eine Anzeige in Form mehrerer zweifarbiger Leuchtdioden 151

Das dem zweiten Ausführungsbeispiel zugrundeliegende Messprinzip beruht darauf, dass die Elastomerauflage 130 durch eine Auflast mehr oder weniger verformt wird. Die Erfindung macht sich im zweiten Ausführungsbeispiel zunutze, dass die Verformung aufgrund der Materialbeschaffenheit von der auflastenden Druckkraft abhängig ist. Die Sensoranordnung ist daher dazu ausgebildet, die Verformung der Elastomerauflage 130 zu messen. Dies kann kapazitiv oder, wie im vorliegenden Ausführungsbeispiel, induktiv erfolgen.

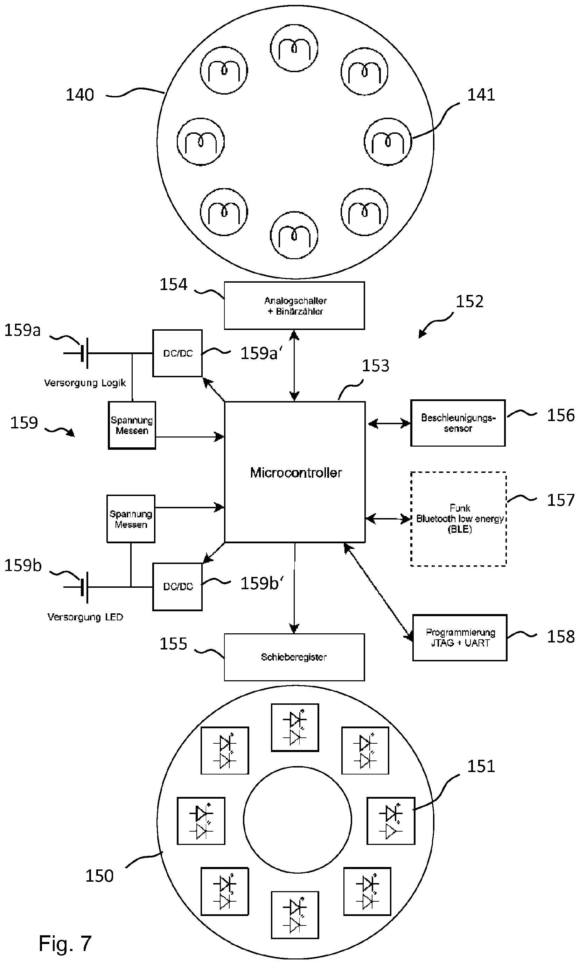

Im Inneren der Elastomerauflage 130 ist ein metallisches Zwischenblech 132 eingebettet. Das Zwischenblech 132 sorgt einerseits für eine flächige Druckverteilung auf den Aufnahmeteller 110. Außerdem dient das Zwischenblech 132 als Bezugspunkt für eine Abstandsmessung. Das zwischen der Tragstruktur 110 des Tragtellers und dem Zwischenblech 132 befindliche Material der Elastomerauflage wird abhängig von einer auflastenden Kraft verformt. Zur Messung wird die Abstandsänderung zwischen der Tragstruktur 110 und dem Zwischenblech 132 unter Krafteinwirkung, also die Dickenänderung der dazwischen befindlichen Elastomerschicht, gemessen. Die Änderung des Abstands wirkt sich auf die Induktivität einer Spule aus, die wiederum elektrisch ausgewertet werden kann. In Figur 7 sind die Sensoranordnung und die Auswerteelektronik dargestellt.

Auf der oberen Leiterplatte 140 sind in kreisförmiger Anordnung insgesamt acht gedruckte Spulen 141 aufgebracht. Diese sind über die durch den Tragteller 110 verlaufende Steckverbindung (nicht gezeigt) mit der auf der unteren Leiterplatte 150 befindlichen Auswerteelektronik 152 verbunden, die in Form integrierter Schaltkreise realisiert werden kann. Außerdem befinden sich auf der unteren Leiterplatte 150 in ebenfalls kreisförmiger Anordnung insgesamt acht zweifarbige Leuchtdioden 151. Jede der Leuchtdioden 151 ist einer der gedruckten Spulen 141 zugeordnet und dient als Anzeige der mittels dieser Spule ermittelten Auflagekraft. Die Messung und Anzeige der Druckkraft erfolgt somit über acht Sektoren, die der Segmentierung der Stufenringe 131 der Elastomerauflage 130 entsprechen.

Die Auswerteelektronik 152 umfasst einen Mikrocontroller 153, einen integrierten Steuerbaustein mit Analogschalter und Binärzähler, einen integrierten Steuerbaustein mit Schieberegistern, einen Beschleunigungssensor 156, ein Sender/Empfängermodul 157 zur drahtlosen Datenübertragung beispielsweise nach dem Bluetooth- oder Zigbee-Standard, sowie eine Programmierschnittstelle 158 nach dem JTAG und/oder UART Standard.

Die Ansteuerung bzw. Messung der Induktivität der Spulen 141 erfolgt über den Analogschalterbaustein 154, der auch Binärzähler aufweist, mit deren Hilfe durch Auszählen über definierte Zeitintervalle eine Signalfrequenz gemessen werden kann. Die Ansteuerung der LEDs 151 erfolgt gemultiplext, d.h. in zeitlichem Versatz über die als Port-Extender dienenden Schieberegister 155.

Die Stromversorgung 159 erfolgt über zwei Batterien 159a, 159b, z.B. 3 V Lithium-Knopfzellen, von denen die eine 159a zur Versorgung der Auswerteelektronik 152, die andere 159b zur Versorgung der LEDs 151 dient, da letztere im Betrieb den höchsten Stromverbrauch haben. Jede der Batterien besitzt einen geregelten DC/DC-Wandler 159a', 159b', um die Spannung auf einen niedrigeren Wert von z.B. 2 V herunter zu regeln. Die Regelung der DC/DC-Wandler 159a', 159b' übernimmt ebenfalls der Mikrocontroller 153, welcher die jeweilige Batteriespannung misst und den zugehörigen DC/DC-Wandler 159a', 159b' entsprechend ansteuert.

Zur Signalerfassung werden die gedruckten Spulen 141 verwendet, die abhängig vom Abstand zum Zwischenblech 132 in der Auflage 130 ihre Induktivität ändern. Um die Induktivitätsänderung zu messen wird ein modifizierter Colpitts-Oszillator verwendet. Um den Schaltungsaufwand bzw. die benötigten Bauteile und Signalleitungen gering zu halten, werden je vier Spulen über den Analogschalter 154 auf den Oszillator geschaltet. Dadurch kann auch vermieden werden, dass sich die Spulen 141 gegenseitig beeinflussen. Um das Sensorsignal möglichst einfach mit dem Microcontroller 153 auswerten zu können, wird ein Zählerbaustein 154 eingesetzt, der die Oszillatorschwingungen misst. Das Ausgangssignal des Zählerbausteins 154 kann direkt mit einem Input Capture des Microcontrollers 153 ausgewertet werden. Um eine Bewegung zu erkennen und damit die Kraftmessung zu starten, wird der Beschleunigungssensor 156 eingesetzt. Dieser Beschleunigungssensor 156 kann außerdem dazu verwendet werden, die Lage zu erkennen und somit z.B. auch erkennen ob der Tragteller 110 waagrecht eingebaut ist.

Zur Anzeige wird je Sektor eine der 2-farbigen LEDs 151 verwendet. Um Pins am Microcontroller 153 zu sparen werden zur Ansteuerung Schieberegister 155 als Port-Extender verwendet. Da die Spannungsversorgung 159 nicht viel Strom treiben kann, sollte immer nur eine der LEDs 151 aktiv sein und somit die Ansteuerung gemultiplext erfolgen. Dies verlängert die Lebensdauer der Batterie 159b. Die Intensität der LEDs kann durch eine zusätzliche PWM-Ansteuerung reduziert werden.

Über die Funkschnittstelle 157 können die pro Sektor ermittelten, auflastabhängigen Messwerte an einen Zentralcomputer oder über ein Netzwerk zu entfernten Servern übertragen werden, wo die Messwerte weiter ausgewertet und gespeichert werden.

## Patentansprüche

1. Hebebühne für Fahrzeuge mit mittels eines Hubmechanismus (1, 2) höhenverstellbaren Tragarmen (3, 4, 5, 6) zum Anheben des Fahrzeugs und mit an einem freien Ende der Tragarme (3, 4, 5, 6) angeordneten Tragtellern (3a, 4a, 5a, 6a; 10) zum Tragen des zu hebenden Fahrzeugs, wobei die Tragteller (3a, 4a, 5a, 6a; 10; 100) Mittel (14, 20) zum Erfassen einer auf den Tragteller (10; 100) wirkenden Gewichtskraft umfassen,
**dadurch gekennzeichnet, dass**
an den Tragtellern (3a, 4a, 5a, 6a; 10; 100) jeweils eine Sensoranordnung (10, 20) aus einer Mehrzahl über eine Anlagefläche der Tragteller (3a, 4a, 5a, 6a; 10; 100) verteilt angeordneter Drucksensoren (141) verbaut ist und jedem Tragteller (3a, 4a, 5a, 6a; 10; 100) eine Anzeige (15; 151) zugeordnet ist, welche eine Druckverteilung über die Anlagefläche des jeweiligen Tragtellers (3a, 4a, 5a, 6a; 10; 100) anzeigt,
wobei die einem Tragteller (3a, 4a, 5a, 6a; 10; 100) zugeordnete Anzeige (15; 151) an der Unterseite des zugehörigen Tragtellers oder an der Unterseite des dem Tragtellers (3a, 4a, 5a, 6a; 10, 100) zugehörigen Tragarmes (3, 4, 5, 6) angeordnet ist.

2. Hebebühne nach einem der vorangehenden Ansprüche, bei der die Anzeigen (15; 151) als Leuchtanzeigen, insbesondere mehrfarbige Leuchtanzeigen, insbesondere Leuchtdioden, ausgebildet sind.

3. Hebebühne nach einem der vorangehenden Ansprüche, bei der die Sensoranordnung (14) als Matrixssensor (20) mit einer Vielzahl matrixförmig angeordneter Sensorzellen ausgebildet ist.

4. Hebebühne nach Anspruch 3, bei der die Anzeige (15) pro Sensorzelle ein vorzugsweise mehrfarbiges Leuchtmittel, insbesondere eine mehrfarbige Leuchtdiode aufweist und die Leuchtmittel in dem Matrixsensor (20) entsprechender Matrixform angeordnet sind.

5. Hebebühne nach Anspruch 3 oder 4, bei der die Sensorzellen als piezoresistive Sensoren ausgebildet sind.

6. Hebebühne nach einem der Ansprüche 3 bis 5, bei der die Sensoranordnung (14) als Foliensensor (20) ausgebildet ist, der zumindest zwei Folien (21, 22) umfasst, auf denen Leiterbahnen (23) aufgebracht sind, wobei die Leiterbahnen (23) der beiden Folien (21, 22) sich wechselseitig kreuzen und deren Kreuzungspunkte die Sensorzellen bilden.

7. Hebebühne nach einem der vorangehenden Ansprüche, bei der die Tragteller (3a, 4a, 5a, 6a; 10; 100) eine tellerförmige Tragstruktur (11; 110) und eine darüber angeordnete, insbesondere gummielastische Auflage (13; 130) aufweisen und die Sensoranordnung (151) ausgebildet ist, eine Verformung der elastischen Auflage (13; 130) unter Krafteinwirkung zu detektieren.

8. Hebebühne nach Anspruch 7, bei dem in die elastische Auflage der Tragteller (3a, 4a, 5a, 6a; 10, 100) ein metallisches Element (132), insbesondere ein scheibenförmiges Element eingebettet ist und die Sensoranordnung (141) ausgebildet sind, eine Abstandsänderung zwischen dem Element (132) und der Tragstruktur (100) unter Krafteinwirkung zu detektieren.

9. Hebebühne nach Anspruch 7 oder 8, bei dem die Sensoranordnung (141) zwischen der elastischen Auflage (130) und der Tragstruktur (110) angeordnet ist.

10. Hebebühne nach einem der Ansprüche 7 bis 9, bei dem die Sensoranordnung (141) mindestens eine Spule aufweist und bei dem eine Messanordnung (152) vorgesehen ist zur Messung einer Änderung der Induktivitität der Spule (141) aufgrund einer Abstandsänderung zwischen Spule (151) und metallischen Element (132).

11. Hebebühne nach Anspruch 10, bei dem die Sensoranordnung mehrere in Umfangsrichtung versetzt angeordnete Spulen (141), insbesondere auf eine zwischen elastischer Auflage (130) und Tragstruktur (110) angeordnete Leiterplatte (140) aufgedruckte Spulen (141) umfasst.

12. Hebebühne nach einem der vorangehenden Ansprüche, bei die Sensoranordnungen (14; 141) und zugeordneten Anzeigen (15; 151) der Tragteller (3a, 4a, 5a, 6a; 10; 100) batteriebetrieben sind.

13. Hebebühne nach einem der vorangehenden Ansprüche, bei der aus den von den Sensoranordnungen (14; 141) erzeugten Signalen eine auf dem zugehörigen Tragteller (3a, 4a, 5a, 6a; 10; 100) lastende Gesamtgewichtskraft ermittelt und vorzugsweise drahtlos an eine zentrale Steuerung übertragen wird.

14. Tragteller (10; 100) für eine Fahrzeug-Hebebühne mit Mitteln (14; 141) zum Erfassen einer auf den Tragteller (10; 100) wirkenden Gewichtskraft,
**dadurch gekennzeichnet, dass**
an dem Tragteller (10; 100) eine Sensoranordnung (14; 141) aus einer Mehrzahl über eine Anlagefläche des Tragtellers (10; 100) verteilt angeordneter Drucksensoren vorgesehen ist und dem Tragteller (10; 100) eine an dessen Unterseite angeordnete Anzeige (15; 151) zugeordnet ist, welche eine Druckverteilung über die Anlagefläche des Tragtellers (10; 100) anzeigt.

## Claims

1. Lifting platform for vehicles with support arms (3, 4, 5, 6) which can be adjusted in height by a lifting mechanism (1, 2) for lifting the vehicle and with support plates (3a, 4a, 5a, 6a; 10) arranged at a free end of the support arms (3, 4, 5, 6) for supporting the vehicle to be lifted, wherein the support plates (3a, 4a, 5a, 6a; 10; 100) comprise means (14, 20) for detecting a weight force acting on the support plate (10; 100),
**characterised in that**
a sensor arrangement (10, 20) consisting of a plurality of pressure sensors (141) distributed over a contact surface of the support plates (3a, 4a, 5a, 6a; 10; 100) is installed on each of the support plates (3a, 4a, 5a, 6a; 10; 100) and an indicator (15; 151) is assigned to each support plate (3a, 4a, 5a, 6a; 10; 100), which indicates a pressure distribution over the contact surface of the respective support plate (3a, 4a, 5a, 6a; 10; 100),
wherein the indicator (15; 151) associated with a support plate (3a, 4a, 5a, 6a; 10; 100) is arranged on the underside of the associated support plate or on the underside of the support arm (3, 4, 5, 6) associated with the support plate (3a, 4a, 5, 6a; 10, 100).

2. Lifting platform according to any of the preceding claims, wherein the indicators (15; 151) are configured as indicator lights, in particular multicoloured indicator lights, in particular light-emitting diodes.

3. Lifting platform according to any of the preceding claims, wherein the sensor arrangement (14) is configured as a matrix sensor (20) with a plurality of sensor cells arranged in a matrix.

4. Lifting platform according to claim 3, wherein the indicator (15) has a preferably multicoloured light, in particular a multicoloured light-emitting diode, for each sensor cell, and the lights are arranged in a matrix form corresponding to the matrix sensor (20).

5. Lifting platform according to claim 3 or 4, wherein the sensor cells are configured as piezoresistive sensors.

6. Lifting platform according to any of claims 3 to 5, wherein the sensor arrangement (14) is configured as a foil sensor (20) which comprises at least two foils (21, 22), on which conductor tracks (23) are applied, wherein the conductor tracks (23) of the two foils (21, 22) cross one another alternately and their crossing points form the sensor cells.

7. Lifting platform according to any of the preceding claims, wherein the support plates (3a, 4a, 5a, 6a; 10; 100) have a plate-shaped support structure (11; 110) and a support (13; 130), in particular a rubber-elastic support, arranged above, and the sensor arrangement (151) is configured to detect a deformation of the resilient support (13; 130) under the action of force.

8. Lifting platform according to claim 7, wherein a metallic element (132), in particular a disc-shaped element, is embedded into the resilient support of the support plates (3a, 4a, 5a, 6a; 10, 100) and the sensor arrangement (141) is configured to detect a change in distance between the element (132) and the support structure (100) under the action of force.

9. Lifting platform according to claim 7 or 8, wherein the sensor arrangement (141) is arranged between the resilient support (130) and the support structure (110).

10. Lifting platform according to any of claims 7 to 9, wherein the sensor arrangement (141) has at least one coil and wherein a measuring arrangement (152) is provided for measuring a change in the inductance of the coil (141) due to a change in distance between the coil (151) and the metallic element (132).

11. Lifting platform according to claim 10, wherein the sensor arrangement comprises a plurality of coils (141) arranged offset in circumferential direction, in particular coils (141) printed on a printed circuit board (140) arranged between the resilient support (130) and the support structure (110).

12. Lifting platform according to any of the preceding claims, wherein the sensor arrangements (14; 141) and associated indicators (15; 151) of the support plates (3a, 4a, 5a, 6a; 10; 100) are battery operated.

13. Lifting platform according to any of the preceding claims, in which a total weight force acting on the associated support plate (3a, 4a, 5a, 6a; 10; 100) is determined from the signals generated by the sensor arrangements (14; 141) and is transmitted, preferably wirelessly, to a central control system.

14. Support plate (10; 100) for a vehicle lifting platform with means (14; 141) for detecting a weight force acting on the support plate (10; 100),
**characterised in that**
a sensor arrangement (14; 141) consisting of a plurality of pressure sensors distributed over a contact surface of the support plate (10; 100) is provided on the support plate (10; 100) and an indicator (15; 151) arranged on the underside of the support plate (10; 100) is associated with the support plate and indicates a pressure distribution over the contact surface of the support plate (10; 100).

## Revendications

1. Pont élévateur pour véhicules comprenant des bras de support (3, 4, 5, 6) réglables en hauteur par l'intermédiaire d'un mécanisme de levage (1, 2) pour soulever le véhicule et des plateaux de support (3a, 4a, 5a, 6a ; 10) agencés à une extrémité libre des bras de support (3, 4, 5, 6) pour supporter le véhicule à soulever, dans lequel les plateaux de support (3a, 4a, 5a, 6a ; 10 ; 100) comprennent des moyens (14, 20) pour détecter une force de poids agissant sur le plateau de support (10 ; 100),
**caractérisé en ce que**
un ensemble de capteur (10, 20) constitué d'une pluralité de capteurs de pression (141) agencés répartis sur une surface d'appui des plateaux de support (3a, 4a, 5a, 6a ; 10 ; 100) est monté sur les plateaux de support (3a, 4a, 5a, 6a ; 10 ; 100), et chaque plateau de support (3a, 4a, 5a, 6a ; 10 ; 100) est associé à un dispositif d'affichage (15 ; 151), qui indique une répartition de pression sur la surface d'appui du plateau de support respectif (3a, 4a, 5a, 6a ; 10 ; 100),
dans lequel le dispositif d'affichage (15 ; 151) associé à un plateau de support (3a, 4a, 5a, 6a ; 10 ; 100) est agencé sur la face inférieure du plateau de support correspondant ou sur la face inférieure du bras de support (3, 4, 5, 6) correspondant au plateau de support (3a, 4a, 5a, 6a ; 10, 100).

2. Pont élévateur selon l'une quelconque des revendications précédentes, dans lequel les dispositifs d'affichage (15 ; 151) sont réalisés sous la forme de dispositifs d'affichage éclairés, en particulier de dispositifs d'affichage éclairés multicolores, en particulier de diodes électroluminescentes.

3. Pont élévateur selon l'une quelconque des revendications précédentes, dans lequel l'agencement de capteurs (14) est réalisé sous la forme d'un capteur matriciel (20) avec une pluralité de cellules de capteur agencées sous la forme d'une matrice.

4. Pont élévateur selon la revendication 3, dans lequel le dispositif d'affichage (15) présente des moyens d'éclairage de préférence multicolores par cellule de capteur, en particulier une diode électroluminescente multicolore, et les moyens d'éclairage sont agencés sous une forme de matrice correspondant au capteur matriciel (20).

5. Pont élévateur selon la revendication 3 ou 4, dans lequel les cellules de capteur sont réalisées sous la forme de capteurs piézorésistifs.

6. Pont élévateur selon l'une quelconque des revendications 3 à 5, dans lequel l'agencement de capteurs (14) est réalisé sous la forme d'un capteur en forme de feuille (20) qui comprend au moins deux feuilles (21, 22) sur lesquelles sont appliquées des pistes conductrices (23), dans lequel les pistes conductrices (23) des deux feuilles (21, 22) se croisent en alternance et leurs points de croisement forment les cellules de capteur.

7. Pont élévateur selon l'une quelconque des revendications précédentes, dans lequel les plateaux de support (3a, 4a, 5a, 6a ; 10 ; 100) présentent une structure de support (11 ; 110) en forme de plateau et en particulier un support élastique en caoutchouc (13 ; 130) agencé au-dessus, et l'agencement de capteurs (151) est conçu pour détecter une déformation du support élastique (13 ; 130) sous l'action d'une force.

8. Pont élévateur selon la revendication 7, dans lequel un élément métallique (132), notamment un élément en forme de disque, est intégré dans le support élastique des plateaux de support (3a, 4a, 5a, 6a ; 10, 100), et l'agencement de capteurs (141) est conçu pour détecter un changement de distance entre l'élément (132) et la structure de support (100) sous l'action d'une force.

9. Pont élévateur selon la revendication 7 ou 8, dans lequel l'agencement de capteurs (141) est disposé entre le support élastique (130) et la structure de support (110).

10. Pont élévateur selon l'une quelconque des revendications 7 à 9, dans lequel l'agencement de capteurs (141) présente au moins une bobine et dans lequel un dispositif de mesure (152) est prévu pour mesurer une modification de l'inductance de la bobine (141) due à une modification de la distance entre la bobine (151) et l'élément métallique (132).

11. Pont élévateur selon la revendication 10, dans lequel l'agencement de capteurs comprend une pluralité de bobines (141) agencées décalées dans la direction circonférentielle, en particulier des bobines (141) imprimées sur une carte de circuit imprimé (140) agencée entre le support élastique (130) et la structure de support (110).

12. Pont élévateur selon l'une quelconque des revendications précédentes, dans lequel les agencements de capteurs (14 ; 141) et les dispositifs d'affichage associés (15 ; 151) des plateaux de support (3a, 4a, 5a, 6a ; 10 ; 100) sont alimentés par batterie.

13. Pont élévateur selon l'une quelconque des revendications précédentes, dans lequel une force de poids totale agissant sur le plateau de support correspondant (3a, 4a, 5a, 6a; 10 ; 100) est déterminée à partir des signaux générés par les agencements de capteurs (14 ; 141) et est transmise de préférence sans fil à un dispositif de commande central.

14. Plateau de support (10; 100) pour un pont élévateur de véhicule avec des moyens (14; 141) pour détecter une force de poids agissant sur le plateau de support (10; 100),
**caractérisé en ce que**
sur la plaque de support (10 ; 100) est prévu un agencement de capteurs (14 ; 141) composé d'une pluralité de capteurs de pression agencés répartis sur une surface d'appui du plateau de support (10; 100), et au plateau de support (10; 100) est associé un dispositif d'affichage (15 ; 151), qui indique une répartition de pression sur la surface d'appui du plateau de support (10 ; 100).
